# FASCICULE DE BREVET EUROPEEN

(11) **EP 1 648 139 B1**
(45) Date de publication et mention de la délivrance du brevet: **02.07.2008**
(21) Numéro de dépôt: 05354034.0
(22) Date de dépôt: 23.09.2005
(51) Int. Cl.: H04L 29/06, H04L 29/08, H04L 12/56

(54) **Dispositif et procédé de communication à contrôle de priorité**
Kommunikationsvorrichtung und -verfahren zur Prioritätssteuerung
Communication appartus and method for priority control

(30) Priorité: 07.10.2004 FR 0410616
(43) Date de publication de la demande: 19.04.2006
(73) Titulaire: SCHNEIDER ELECTRIC INDUSTRIES SAS, 92500 Rueil-Malmaison (FR)
(72) Inventeur: Moulin, Michel, 38050 Grenoble Cedex 09 (FR); Jammes, François, 38050 Grenoble Cedex 09 (FR)
(74) Mandataire: Tripodi, Paul

(56) Documents cités:
- WO-A-00/20876
- WO-A-03/085921
- US-A1- 2002 041 592
- US-A1- 2004 062 258
- JASPERNEITE J ET AL: "Switched ethernet for factory communication" EMERGING TECHNOLOGIES AND FACTORY AUTOMATION, 2001. PROCEEDINGS. 2001 8TH IEEE INTERNATIONAL CONFERENCE ON OCT. 15-18, 2001, PISCATAWAY, NJ, USA,IEEE, 15 octobre 2001 (2001-10-15), pages 205-212, XP010588971 ISBN: 0-7803-7241-7
- SHARA EVANS: "Standards watch: 802.1p - A start at Ethernet prioritisation" TELESYTE STANDARDS WATCH, septembre 1998 (1998-09), XP002267452

## Description

### DOMAINE TECHNIQUE

L'invention concerne un dispositif de communication à contrôle de priorité comportant
- des moyens de réception de trames de message,
- des moyens de stockage de messages de réception,
- des moyens de traitement de tâches réseau utilisant des données de messages de réception fournis par les moyens de stockage,
- des moyens de traitement de tâches d'application recevant des données des moyens de traitement de tâche réseau et fournissant des données de communication,
- une pile de communication de messages d'émission ou de réponse,
- des moyens de gestion de pile de communication recevant les données ou des informations de communication des moyens de traitement de tâche d'application et fournissant des messages d'émission ou de réponse à stocker dans ladite pile de communication, et
- des moyens d'émission de messages stockés dans ladite pile de communication.

L'invention concerne aussi un procédé de communication comportant la réception de messages de réception ayant des priorités différentes, le traitement desdits messages de réception, et l'émission de messages d'émission résultant du traitement desdits messages de réception.

### ETAT DE LA TECHNIQUE

Dans la plupart des applications basées notamment sur des messages de type Internet, Intranet (TCP/IP) les fonctions sont exécutées de manières séquentielles. Une fonction doit se terminer avant qu'une autre fonction suivante soit exécutée. Par exemple, le code de la gestion d'une pile de communication peut s'exécuter si aucune autre partie dudit n'est en cours d'exécution. Ainsi, si une fonction est appelée et aucune autre fonction est en cours d'exécution, la fonction appelée s'exécute normalement. Dans un autre cas, si une autre fonction est en cours d'exécution, la fonction appelée est exécutée après la fin de l'exécution de l'autre fonction en cours.

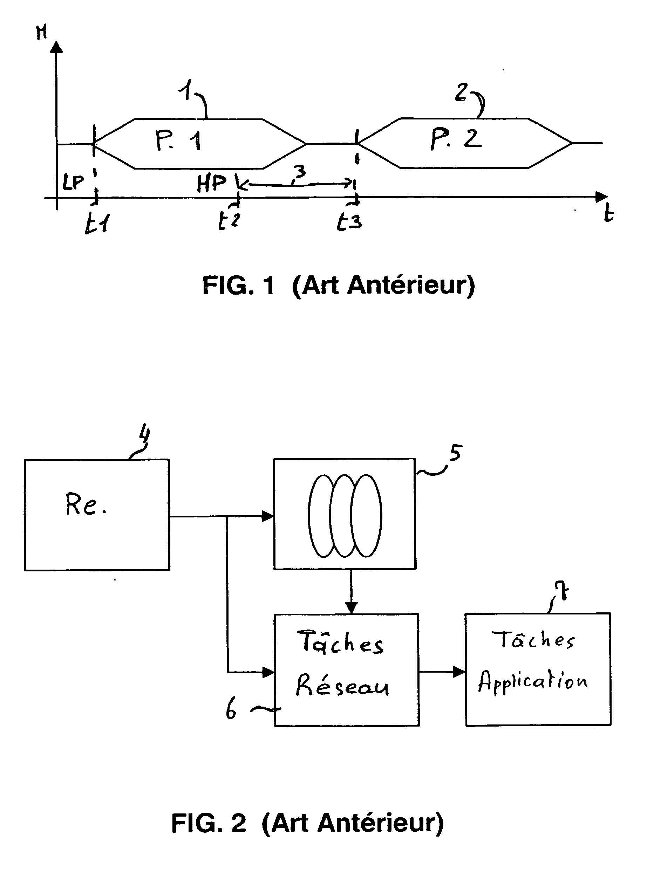

La figure 1 montre un chronogramme de la succession des traitements des signaux en fonction de l'arrivé des messages comportant des informations de priorité. A un instant t1, un premier message de réception de basse priorité LP est traité dans une tâche 1 pouvant être une tâche réseau ou une tâche application. Puis, à un instant t2, un second message de priorité HP plus élevée arrive dans le dispositif de communication. La tâche 1 en cours se termine après un délai 3. Puis à un instant t3, lorsqu'il n'y a plus de tâches en cours, une tâche 2 s'exécute en fonction des données du second message.

Le traitement des signaux en fonction de priorité est connue de la publication WO 03/085921.

En réception, des tâches réseau sont utilisées avec des piles de communication de messages de réception pour fournir des messages à une tâche application destinée à recevoir lesdits messages. Sur la figure 2, un module 4 fournit des messages de réception à une pile de stockage de messages de réception et déclenche l'appel de tâches réseau dans un module 6 pour un premier traitement des messages reçus et stockés dans la pile 5. le module 6 fournit à son tour un message à un module 7 de traitement de tâches application.

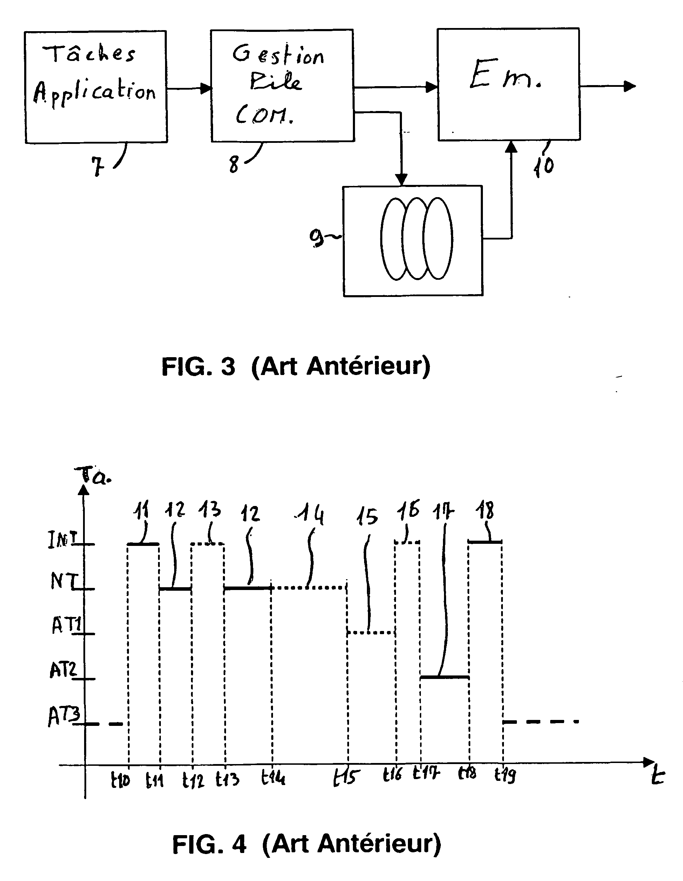

En émission, comme dans l'exemple de la figure 3, le module 7 de traitement de tâches application fournit des messages à émettre à un module 8 de gestion d'une pile de communication 9. Le module 8 rempli la pile de communication 9 de messages d'émission et informe un module 10 d'émission de la présence de messages à émettre. La pile 9 peut elle-même déclencher directement le module démission 10 pour l'émission de messages.

La figure 4 montre un chronogramme d'exécution de tâches dans un dispositif communication connu. A un instant t10, une tâche de fond AT3 est interrompue par la réception d'un premier message à traiter et une première tâche 11 de traitement d'interruption INT commence à s'exécutée. Puis, à un instant t11, une tâche 12 de traitement de tâche réseau NT commence à traiter ledit premier message. A un instant T12, un second message de priorité plus élevée arrive et une seconde tâche 13 de traitement d'interruption INT est exécutée jusqu'à l'instant t13. Alors, le traitement de la première tâche réseau 12 se poursuit jusqu'à l'instant t14 où une seconde tâche 14 de traitement de tâche réseau NT commence à traiter ledit second signal plus prioritaire que le premier message. Puis, à un instant t15, une première tâche 15 de traitement d'application AT1 traite l'application désignée pour le second message de priorité élevé, et à l'instant t16 en fin de traitement de la tâche d'application, une tâche 16 de traitement d'interruption envoie le message de réponse vers le réseau. A un instant t17, une seconde tâche 17 de traitement d'application AT2 traite l'application désignée pour le premier message de priorité basse. Cette tâche récupère des messages fournis par la première tâche de réseau 12 et fournit à un instant t18 un message de réponse à envoyer par une seconde tâche d'interruption 18. Ensuite, à un instant t19, la tâche de fond AT3 poursuit sont exécution.

Les dispositifs de communication connus ont des temps de réponse variables liés à la taille des données à traiter et peu prévisibles. De plus, des temps de réponse trop longs ne sont pas compatibles avec des applications ayants des messages à plusieurs niveaux de priorité. En particulier, dans des applications industrielles ou automatisées, des temps de réponses trop longs et imprévisibles peuvent avoir des conséquences sur la sécurité et fiabilité de fonctionnement.

### EXPOSE DE L'INVENTION

L'invention a pour but un dispositif et un procédé de communication permettant de réduire les temps de réponse à des messages ayant des priorités élevées.

Dans un dispositif selon l'invention :
- les moyens de stockage de messages de réception comportent au moins deux piles de stockage de messages de réception pour stocker des messages de priorités différentes, chaque pile étant destinée à stocker des messages d'un niveau de priorité prédéfini, et
- des moyens de traitement de tâches réseau et des moyens de traitement de tâches d'application peuvent interrompre une tâche en cours d'exécution et exécuter une tâche plus prioritaire lorsqu'un nouveau message de réception comporte une information de priorité plus élevée qu'un message en cours de traitement.

Dans un mode de réalisation préférentiel, les moyens de gestion de pile de communication sont réalisés ou chargés selon un code réentrant pouvant être appelé par au moins deux applications traitant des messages ayant des niveaux de priorité différents.

Avantageusement, les moyens de gestion de pile de communication peuvent être interrompus par un appel de priorité plus élevée.

De préférence, le dispositif de communication comporte des moyens de marquage de messages de communication à émettre, lesdits moyens de marquage intégrant dans des trames de communication une information de niveau de priorité représentative d'un niveau de priorité d'un message d'entrée correspondant.

Un procédé de communication selon l'invention comportant la réception de messages de réception ayant des priorités différentes, le traitement desdits messages de réception, et l'émission de messages d'émission résultant du traitement desdits messages de réception, comporte :
- une étape de copie de message de réception dans au moins une pile d'au moins deux piles de messages de réceptions pour des priorités différentes,
- une étape de sélection de tâches réseau pour traiter dans une étape de traitement de tâche réseau des messages de priorité la plus élevée récupérés dans une pile de réception de messages, et
- une étape de tâche application recevant les messages traités par une tâche réseau.
- une étape d'interruption de la gestion de pile de communication par un appel de priorité plus élevée.

De préférence, ladite étape de gestion de pile de communication est à code réentrant pouvant être appelée par au moins deux applications traitant des messages ayant des niveaux de priorité différents.

Avantageusement, le procédé comporte une étape de marquage de messages de communication à émettre, ladite étape de marquage intégrant dans des trames de communication une information de niveau de priorité représentative d'un niveau de priorité d'un message d'entrée correspondant.

Avantageusement, le procédé comporte une étape de retour vers une tâche de traitement ou de gestion de priorité inférieure interrompue.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente une succession de tâches dans un dispositif de l'état de la technique ;
- la figure 2 représente un exemple de réception de message dans un dispositif de l'état de la technique ;
- la figure 3 représente un exemple d'émission de message de réponse dans un dispositif de l'état de la technique ;
- la figure 4 représente un chronogramme de tâches dans un dispositif de l'état de la technique ;
- la figure 5 représente une succession de tâches dans un dispositif selon un mode de réalisation de l'invention ;
- la figure 6 représente un exemple de réception de message dans un dispositif selon un mode de réalisation de l'invention ;
- la figure 7 représente un exemple d'émission de message de réponse dans un dispositif selon un mode de réalisation de l'invention ;
- la figure 8 représente un chronogramme de tâches dans un dispositif selon un mode de réalisation de l'invention ;
- la figure 9 représente un organigramme d'un exemple de procédé selon un mode de réalisation de l'invention.

### DESCRIPTION DETAILLEE DE MODES DE REALISATION PREFERES

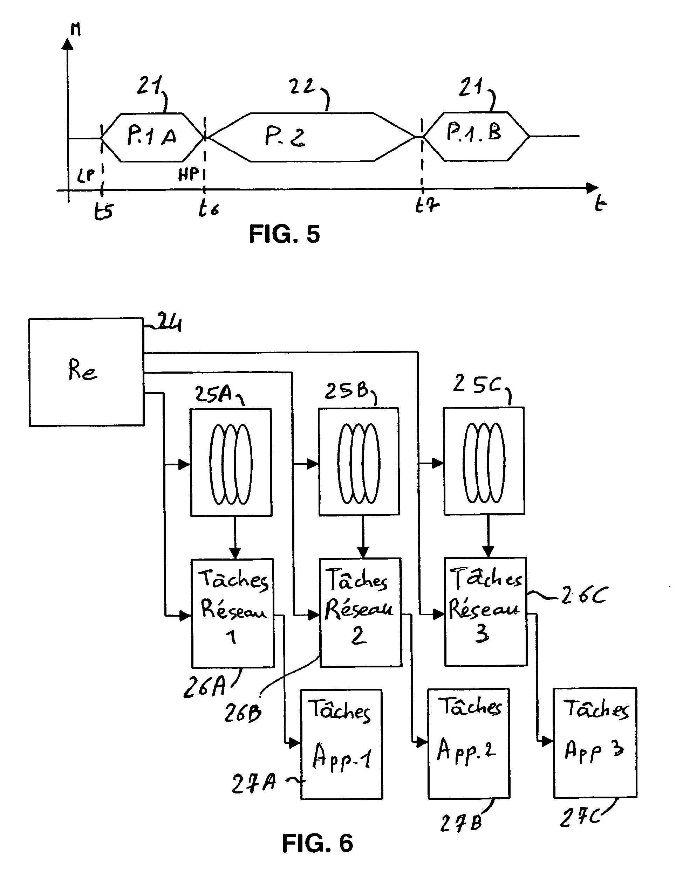

La figure 5 montre un chronogramme de la succession des traitements en fonction de l'arrivée de messages comportant des informations de priorité dans un dispositif de communication selon un mode de réalisation de l'invention. A un instant t5, un premier message de réception de basse priorité LP est traité dans une tâche 21 pouvant être une tâche réseau ou une tâche application. Puis, à un instant t6, un second message de réception de priorité HP plus élevée arrive dans le dispositif de communication. La tâche 21 en cours d'exécution est interrompue et une seconde tâche 22 destinée à traiter le second message plus prioritaire est exécutée. Lorsque la tâche 21 est terminée, un message de réponse est envoyé. A un instant t7, la tâche 21 est reprise pour le traitement du premier message de priorité plus basse.

Dans la partie réception d'un dispositif de communication à contrôle de priorité représenté sur la figure 6, un module 24 de réception de trames de message reçoit des messages de priorités différentes. Des moyens de stockage de message de réception comportent au moins deux piles 25A, 25B, 25C de stockage de messages de réception pour stocker des messages de priorités différentes, chaque pile étant destinée à stocker des messages d'un niveau de priorité prédéfini. Sur la figure 6, trois piles sont représentées mais un nombre différent peut être possible, avantageusement huit piles permettent de traiter huit niveaux de priorité différents. Ainsi, le module 24 sélectionne et remplit les différentes piles avec des messages de réception selon leur niveau de priorité. Le module 24 déclenche aussi l'appel de tâches réseau dans des modules 26A, 26B, 26C de traitement de tâches réseau utilisant des données de message des différentes piles 25A, 25B, 25C de stockage de message de réception selon leur niveau de priorité. Des modules 27A, 27B, 27C de traitement de tâches d'application reçoivent des données ou des informations des modules de traitement de tâche réseau et fournissent des messages de communication à une pile de communication de messages d'émission.

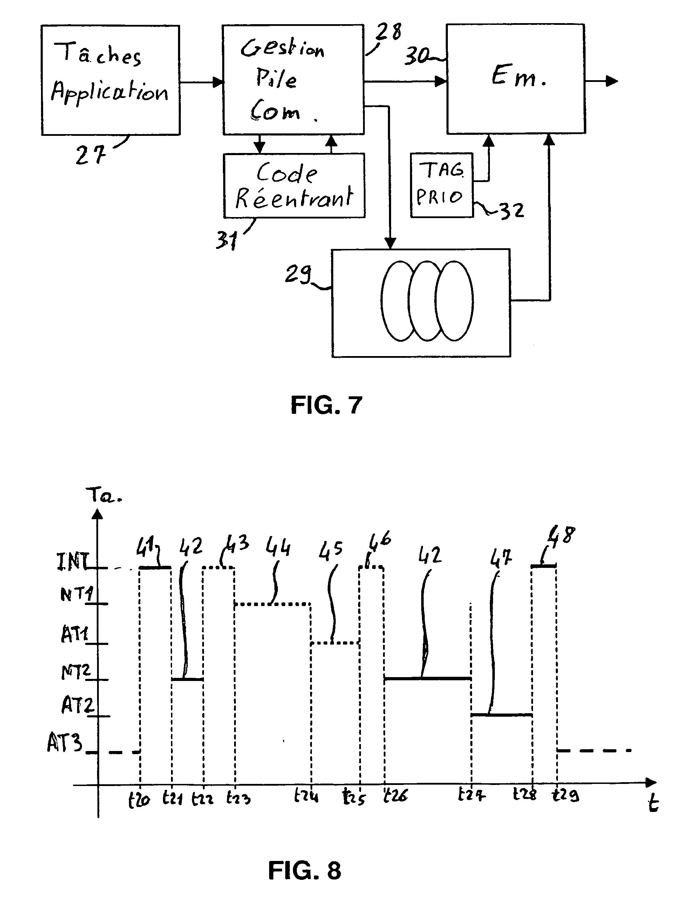

Dans la partie émission d'un dispositif de communication à contrôle de priorité représenté sur la figure 7, un module 27 de traitement de tâches d'application fournit des messages d'émission à un module 28 de gestion d'une pile 29 de communication. Le module 28 gère le remplissage de la pile de communication 29 avec des messages à émettre. La pile de communication 29 fournit les messages à émettre à un module 30 d'émission de messages de réponse.

Pour réduire les temps de réponses et les rendre prévisibles, les modules 26A, 26B, 26C de traitement de tâches réseau et les modules 27, 27A, 27B, 27C de traitement de tâches d'application comportent des moyens d'interruption d'une tâche en cours lorsqu'un nouveau message de réception comportant une information de priorité plus élevée qu'un message en cours d'exécution est détecté.

Le module 28 de gestion de pile de communication est de préférence réalisé ou chargé selon un code réentrant pouvant être appelé par au moins deux applications traitant des messages ayant des niveaux de priorité différents. Sur la figure 7, un module 31 de gestion de code réentrant gère les échanges de données avec le module de gestion de la pile de communication. Ainsi, le module 28 de gestion de pile de communication peut être interrompu par un appel de priorité plus élevée. Les modules 28 et 31 peuvent faire partie d'un seul module ou d'un seul élément.

Dans le dispositif de la figure 7, les messages d'émission sont marqués avec une information de niveau de priorité. Dans ce mode de réalisation, un module 32 de marquage intègre dans des trames de communication une information de niveau de priorité représentative d'un niveau de priorité d'un message d'entrée correspondant.

La figure 8 montre un chronogramme d'exécution de tâches dans un dispositif communication selon un mode de réalisation de l'invention. A un instant t20, une tâche de fond AT3 est interrompue par la réception d'un premier message à traiter et une première tâche 41 de traitement d'interruption INT est exécutée. Puis, à un instant t21, une première tâche 42 de traitement de tâche réseau NT2 commence à traiter ledit premier message. A un instant t22, un second message de priorité plus élevée arrive et une seconde tâche 43 de traitement d'interruption INT est exécutée jusqu'à l'instant t23. Dans ce cas, la première tâche 42 de traitement de tâche réseau NT2 ne se poursuit pas mais une seconde tâche 44 de traitement de tâche réseau NT1 est exécutée pour traiter le second message plus prioritaire. Ensuite, à l'instant t24, une tâche 45 de traitement d'application AT1 traite l'application désignée pour le second message de priorité élevé jusqu'à l'instant t25. Pour terminer, les traitements du second message de priorité élevée, une tâche 46 d'interruption INT indique que l'émission à été faite.

Ensuite, à un instant t26, le traitement de la première tâche réseau 42 reprend jusqu'à l'instant t27 où une tâche 47 de traitement d'application AT2 traite l'application désignée pour le premier message de priorité basse. Cette tâche récupère des messages fournis par la tâche de réseau 42 et fournit à un instant t28 un message de réponse dont l'émission est indiquée par une seconde tâche de d'interruption 48. Ensuite, à un instant t29, la tâche de fond AT3 poursuit sont exécution.

Ce chronogramme illustre le gain de temps de traitement avec un dispositif selon un mode de réalisation de l'invention. En effet, la durée de traitement entre les instants t26 est t22 est très inférieure à la durée de traitement entre les instants t17 et t12 de la figure 4. La période entre les instants t14 et t1 de traitement d'un message de basse priorité est reportée après le traitement complet du message de priorité élevée. Ceci est rendu possible en particulier par l'usage de piles multiples pour les messages de réception est par l'usage de code réentrant dans la gestion de la pile de communication.

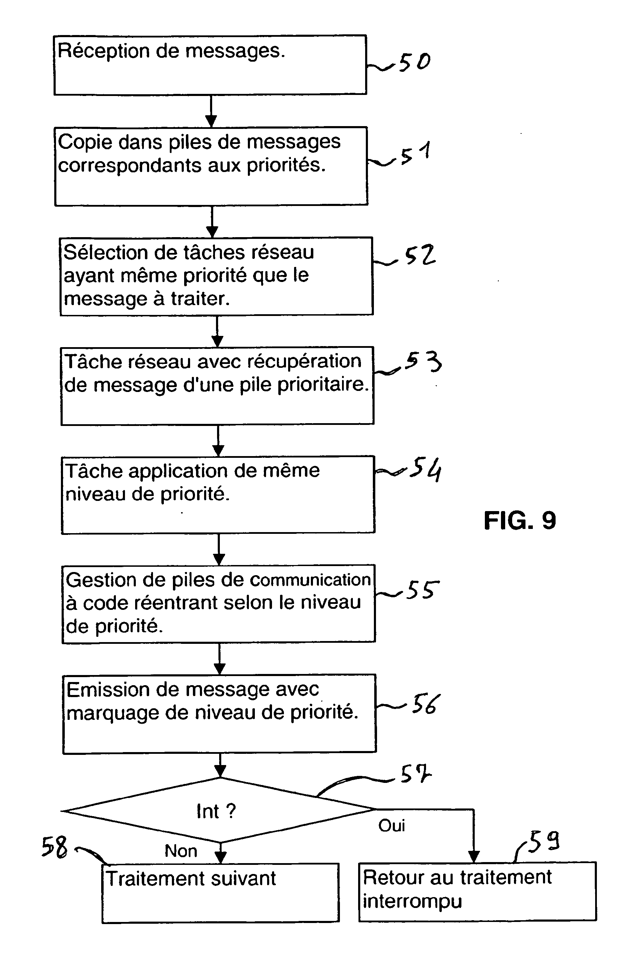

Un procédé de communication comportant la réception de messages de réception ayant des priorités différentes, le traitement desdits messages de réception et l'émission de messages d'émission résultant du traitement desdits message de réception est représenté sur la figure 9. Dans cet organigramme, une étape 50 de réception de messages gère des interruptions de réception. Puis une étape 51 de copie de messages de réception copie lesdits messages dans au moins une pile d'au moins deux piles de messages de réceptions pour des priorités différentes. Une étape 52 de sélection de tâches réseau sélectionne une tâche réseau correspondant à un message de priorité la plus élevée. Dans une étape 53, la tâche réseau sélectionnée récupère et traite un message d'une pile prioritaire. Ensuite, une étape 54 de tâche d'application reçoit et traite des informations des messages sélectionnés.

Une étape 55 de gestion de pile de communication gère des messages de réponse à émettre. Cette étape 55 peut être interrompue par un appel de priorité plus élevée.

Avantageusement, l'étape 55 de gestion de pile de communication est à code réentrant pouvant être appelé par au moins deux applications traitant des messages ayant des niveaux de priorité différents.

Le procédé de la figure 9 comporte une étape 56 de marquage de messages de communication à émettre. Ladite étape 56 de marquage intègre dans des trames de communication une information de niveau de priorité représentative d'un niveau de priorité d'un message d'entrée correspondant.

A une étape 57 de test, le système réactive si nécessaire le traitement précédent si ledit traitement précédent c'est déroulé de manière séquentielle ou s'il a interrompu une tâche en cours d'exécution d'un message de priorité plus basse. S'il n'y a pas eu interruption, une étape 58 oriente le procédé vers le traitement d'un message suivant ou une tâche de fond. S'il y a eu interruption, une étape 59 de retour oriente le traitement vers la tâche interrompue de priorité plus basse.

Dans les modes de réalisation décrits ci-dessus les diverses piles sont montrées séparées, mais l'invention s'applique aussi à des modes différents de réalisation où les piles sont groupées, ou lorsqu'une pile peut avoir plusieurs secteurs attribués à des niveaux différents de priorité.

Avantageusement, les tâches réseau et les tâches applications peuvent être interrompues et peuvent être à code réentrant.

## Revendications

1. Dispositif de communication à contrôle de priorité comportant
- des moyens de réception (4, 24, 50) de trames de message,
- des moyens de stockage (5) de messages de réception,
- des moyens de traitement (6) de tâches réseau utilisant des données de messages de réception fournis par les moyens de stockage,
- des moyens de traitement (6) de tâches d'application recevant des données des moyens de traitement de tâche réseau et fournissant des données de communication,
- une pile de communication (9) de messages d'émission ou de réponse,
- des moyens de gestion (8) de pile de communication recevant les données ou des informations de communication des moyens de traitement de tâche d'application et fournissant des messages d'émission ou de réponse à stocker dans ladite pile de communication, et
- des moyens d'émission (10) de messages stockés dans ladite pile de communication, dispositif **caractérisé en ce que** :
- les moyens de stockage de messages de réception comportent au moins deux piles (25A, 25B, 25C) de stockage de messages de réception pour stocker des messages de priorités différentes, chaque pile étant destinée à stocker des messages d'un niveau de priorité prédéfini, et
- des moyens de traitement (26A, 26B, 26C) de tâches réseau et des moyens de traitement (27A, 27B, 27C) de tâches d'application adaptés pour interrompre une tâche en cours d'exécution et exécuter une tâche plus prioritaire lorsqu'un nouveau message de réception comporte une information de priorité plus élevée qu'un message en cours de traitement.

2. Dispositif selon la revendication 1 **caractérisé en ce que** les moyens de gestion (28) de pile de communication sont réalisés ou chargés selon un code réentrant (31) pouvant être appelé par au moins deux applications traitant des messages ayant des niveaux de priorité différents.

3. Dispositif selon l'une des revendications 1 ou 2 **caractérisé en ce que** les moyens de gestion de pile de communication (28) peuvent être interrompus par un appel de priorité plus élevée.

4. Dispositif selon l'une quelconques des revendications 1 à 3 **caractérisé en ce qu'**il comporte des moyens de marquage (32) de messages de communication à émettre, lesdits moyens de marquage intégrant dans des trames de communication une information de niveau de priorité représentative d'un niveau de priorité d'un message d'entrée correspondant.

5. Procédé de communication comportant la réception de messages de réception ayant des priorités différentes, le traitement desdits messages de réception, et l'émission de messages d'émission résultant du traitement desdits messages de réception,
**caractérisé en ce qu'**il comporte :
- une étape (51) de copie de message de réception dans au moins une pile d'au moins deux piles de messages de réceptions pour des priorités différentes,
- une étape de sélection (52) de tâches réseau pour traiter dans une étape (53) de traitement de tâche réseau des messages de priorité la plus élevée récupérés dans une pile de réception de messages,
- une étape (54) de tâche application recevant les messages traités par une tâche réseau, et une étape (55) d'interruption de la gestion de pile de communication par un appel de priorité plus élevée.

6. Procédé selon la revendication 5 **caractérisé en ce que** ladite étape (55) de gestion de pile de communication est à code réentrant pouvant être appelé par au moins deux applications traitant des messages ayant des niveaux de priorité différents.

7. Procédé selon l'une quelconque des revendications 5 à 6 **caractérisé en ce qu'**il comporte une étape (56) de marquage de messages de communication à émettre, ladite étape de marquage intégrant dans des trames de communication une information de niveau de priorité représentative d'un niveau de priorité d'un message d'entrée correspondant.

8. Procédé selon l'une quelconque des revendications 5 à 7 **caractérisé en ce qu'**il comporte une étape (59) de retour vers une tâche de traitement ou de gestion de priorité inférieure interrompue.

## Claims

1. A communication device with priority control comprising:
- means (4, 24, 50) for receiving message frames,
- means (5) for storing receipt messages,
- means (6) for processing network tasks using receipt message data supplied by the means for storing,
- means (6) for processing application tasks receiving data from the means for processing network tasks and supplying communication data,
- a transmission or response message communication stack (9),
- communication stack management means (8) receiving the communication data or information from the means for processing application tasks and supplying transmission or response messages to be stored in said communication stack, and
- means (10) for transmitting messages stored in said communication stack,
a device **characterized in that**:
- the means for storing receipt messages comprise at least two receipt message storage stacks (25A, 25B, 25C) for storing messages of different priorities, each stack being designed to store messages of predefined priority level, and
- network task processing means (26A, 26B, 26C) and application task processing means (27A, 27B, 27C) able to interrupt a task in the course of execution and to execute a task of higher priority when a new receipt message contains information of higher priority than a message that is being processed.

2. The device according to claim 1 **characterized in that** the communication stack management means (28) are achieved or loaded according to a re-entrant code (31) able to be called by at least two applications processing messages having different priority levels.

3. The device according to one of claims 1 or 2 **characterized in that** the communication stack management means (28) can be interrupted by a call of higher priority.

4. The device according to any one of claims 1 to 3 **characterized in that** it comprises means (32) for tagging communication messages to be transmitted, said means for tagging integrating priority level information representative of a priority level of a corresponding incoming message in communication frames.

5. A communication method comprising receipt of receipt messages having different priorities, processing of said receipt messages, and transmission of transmission messages resulting from processing of said receipt messages,
**characterized in that** it comprises:
- a step (51) of copying receipt messages in at least one stack of at least two receipt message stacks for different priorities,
- a network task selection step (52) to process in a network task processing step (53) messages of highest priority retrieved from a message receipt stack,
- an application task step (54) receiving the messages processed by a network task, and
- a step (55) of interrupting communication stack management by a higher priority call.

6. The method according to claim 5 **characterized in that** said step (55) of interrupting communication stack management is of re-entrant code type able to be called by at least two applications processing messages having different priority levels.

7. The method according to either one of claims 5 and 6 **characterized in that** it comprises a tagging step (56) of communication messages to be transmitted, said tagging step integrating priority level information representative of a priority level of a corresponding incoming message in communication frames.

8. The method according to any one of claims 5 to 7 **characterized in that** it comprises a return step (59) to an interrupted processing or management task of lower priority.

## Patentansprüche

1. Kommunikationseinrichtung mit Prioritätssteuerung, die
- Empfangsmittel (4, 24, 50) zum Empfang von Nachrichtenblöcken,
- Speichermittel (5) zur Speicherung von Empfangsnachrichten,
- Netzwerktask-Verarbeitungsmittel (6), die von den Speichermitteln gelieferte Empfangsnachrichtendaten verwenden,
- Anwendungstask-Verarbeitungsmittel (6), die Daten von den Netzwerktask-Verarbeitungsmitteln empfangen und Kommunikationsdaten liefern,
- einen Kommunikationsstack (9) für Sende- oder Antwortnachrichten,
- Kommunikationsstack-Steuermittel (8), welche die Kommunikationsdaten bzw. Kommunikationsinformationen der Anwendungstask-Verarbeitungsmittel empfangen und im genannten Kommunikationsstack zu speichernde Sende- bzw. Antwortnachrichten liefern, sowie
- Sendemittel (10) zur Aussendung von im genannten Kommunikationsstack gespeicherten Nachrichten umfasst,
**dadurch gekennzeichnet, dass**
- die Speichermittel zur Speicherung von Empfangsnachrichten mindestens zwei Empfangsnachrichten-Speicherstacks (25A, 25B, 25C) zur Speicherung von Nachrichten unterschiedlicher Priorität umfassen, wobei jeder Stack dazu dient, Nachrichten einer bestimmten Prioritätsstufe zu speichern, und
- Netzwerktask-Verarbeitungsmittel (26A, 26B, 26C) und Anwendungstask-Verarbeitungsmittel (27A, 27B, 27C) dazu ausgelegt sind, eine gerade in der Ausführung befindliche Task zu unterbrechen und eine Task höherer Priorität auszuführen, wenn eine neue Empfangsnachricht eine Information enthält, die eine höhere Priorität aufweist als die gerade ausgeführte Nachricht.

2. Einrichtung nach Anspruch 1, **dadurch gekennzeichnet, dass** die Kommunikationsstack-Steuermittel (28) mit einem reentranten Code (31) ausgeführt bzw. geladen sind, der von mindestens zwei Anwendungen aufgerufen werden kann, in denen Nachrichten unterschiedlicher Prioritätsstufen verarbeitet werden.

3. Einrichtung nach Anspruch 1 oder 2, **dadurch gekennzeichnet, dass** die Kommunikationsstack-Steuermittel (28) durch einen Aufruf höherer Priorität unterbrochen werden können.

4. Einrichtung nach irgendeinem der Ansprüche 1 bis 3, **dadurch gekennzeichnet, dass** sie Markierungsmittel (32) zur Markierung von auszusendenden Kommunikationsnachrichten umfasst, welche Markierungsmittel eine Prioritätsstufeninformation in Kommunikationsblöcke einfügen, die die Prioritätsstufe einer entsprechenden Eingangsnachricht abbildet.

5. Kommunikationsverfahrcn, das den Empfang von Empfangsnachrichten unterschiedlicher Priorität, die Verarbeitung der genannten Empfangsnachrichten sowie die Aussendung von aus der Verarbeitung der genannten Empfangsnachrichten resultierenden Sendenachrichten umfasst,
**dadurch gekennzeichnet, dass** es
- einen Kopierschritt (51) zum Kopieren der Empfangsnachricht in mindestens einen Stack von mindestens zwei Empfangsnachrichtenstacks für unterschiedliche Prioritäten,
- einen Auswahlschritt (52) zur Auswahl von Netzwerktasks, um in einem Schritt (53) zur Netzwerktaskvcrarbeitung aus einem Empfangsnachrichtenstack ausgelesene Nachrichten höchster Priorität zu verarbeiten, sowie
- einen Anwendungstaskschritt (54) zum Empfang der von einer Netzwerktask verarbeiteten Nachrichten und einen Interruptschritt (55) zur Unterbrechung der Kommunikationsstacksteuerung durch einen Aufruf höherer Priorität umfasst.

6. Verfahren nach Anspruch 5, **dadurch gekennzeichnet, dass** der genannte Kommunikationsstack-Steuerungsschritt (55) mit einem reentranten Code arbeitet, der von mindestens zwei Anwendungen aufgerufen werden kann, in denen Nachrichten unterschiedlicher Prioritätsstufen verarbeitet werden.

7. Verfahren nach irgendeinem der Ansprüche 5 oder 6, **dadurch gekennzeichnet, dass** es einen Markierungsschritt (56) zur Markierung von auszusendenden Kommunikationsnachrichten umfasst, wobei in dem genannten Markierungsschritt eine Prioritätsstufeninformation in Kommunikationsblöcke eingefügt wird, die die Prioritätsstufe einer entsprechenden Eingangsnachricht abbildet.

8. Verfahren nach irgendeinem der Ansprüche 5 bis 7, **dadurch gekennzeichnet, dass** es einen Rücksprungschritt (59) zur Verzweigung auf eine unterbrochene Verarbeitungstask oder Steuertask niedrigerer Priorität umfasst.
